# EUROPEAN PATENT APPLICATION

(11) **EP 4 708 651 A1**
(43) Date of publication of application: **11.03.2026**
(21) Application number: 25196502.6
(22) Date of filing: 18.08.2025
(51) Int. Cl.: H02K 37/14, G04C 3/14, H02K 1/06

(54) **STEPPING MOTOR AND TIMEPIECE**

(30) Priority: 06.09.2024 JP 2024153588
(71) Applicant: Casio Computer Co., Ltd., Tokyo 151-8543 (JP)
(72) Inventor: SAITO, Yuta, Tokyo 205-8555 (JP)
(74) Representative: Plougmann Vingtoft a/s

(57) **Abstract**

A stepping motor (1) includes: a rotor (3); a stator (1); two yokes (5); and coils (C1 to C3). The stator includes a straight part (12), first and second projection parts (13, 14), and a rotor receiver (20) formed in the second projection part. The first and second projection parts are formed at both ends of the straight part in a longitudinal direction (L) and project in directions crossing the longitudinal direction. The yokes are disposed along the longitudinal direction at both ends of the straight part. One end of each yoke is locked to the first projection part via a first supporter (150), and another end thereof is locked to the second projection part via a second supporter (180). A catch part (65) is formed at one end of each yoke to go around the first supporter from a yoke side toward a straight part side.

## Description

### Technical Field

The present disclosure relates to a stepping motor and a timepiece.

### Description of Related art

There is known a stepping motor having a rotor, a stator, and multiple coils (see the two-coil step motor described in JP2016-152636A, for example).

When a stepping motor has multiple coils, a coil(s) may detach from the stator.

The present disclosure is made in view of the above circumstance. An object of the present disclosure is to provide a stepping motor and a timepiece capable of preventing detachment of coils from the stator even when the stepping motor includes multiple coils.

### SUMMARY OF THE INVENTION

To achieve the above object, according to the present disclosure, a stepping motor including: a rotor magnetized in a radial direction; a stator that includes a straight part, a first projection part, a second projection part, and a rotor receiver that receives the rotor, the first and second projection parts being formed at both ends of the straight part in a longitudinal direction of the straight part and projecting in directions crossing the longitudinal direction, the rotor receiver being formed in the second projection part; two yokes disposed along the longitudinal direction at both ends of the straight part, one end of each of the yokes being locked to the first projection part via a first supporter, another end of each of the yokes being locked to the second projection part via a second supporter; and multiple coils magnetically coupled to the stator, wherein a catch part is formed at the one end of each of the yokes such that the catch part goes around the first supporter from a yoke side toward a straight part side.

### Advantageous Effects of Invention

According to the present disclosure, even when a stepping motor includes multiple coils, detachment of the coils from the stator can be prevented.

### BRIEF DESCRIPTION OF DRAWINGS

FIG. 1A is a plan view of a stepping motor according to an embodiment.
FIG. 1B is a cross-sectional view of the main part of the stepping motor along the b-b line in FIG. 1A.
FIG. 1C is a diagram of the main part of a main board illustrated in FIG. 1B.
FIG. 2 is a perspective view of the stepping motor according to the embodiment.
FIG. 3 is a perspective view of coil boards of the stepping motor and their surroundings illustrated in FIG. 2.
FIG. 4A is a plan view of a stator.
FIG. 4B is a lateral view of the stator viewed in the direction of the arrow b in FIG. 4A.
FIG. 4C is a plan view of the stator on which a coil and a coil board are mounted.
FIG. 4D is a front view of the stator viewed in the direction of the arrow d in FIG. 4C.
FIG. 4E is a plan view of the coil board.
FIG. 5A is a plan view of a first side yoke and a second side yoke.
FIG. 5B is a cross-sectional view of main part of the second side yoke along the b-b line in FIG. 5A.
FIG. 5C is a plan view of the first and second side yokes on which coils and coil boards are mounted.
FIG. 5D is a front view of the first and second side yokes viewed in the direction of the arrow d in FIG. 5C.
FIG. 5E is a plan view of the coil board.
FIG. 6 is a plan view for explaining a catch part formed on the yoke.

### DETAILED DESCRIPTION

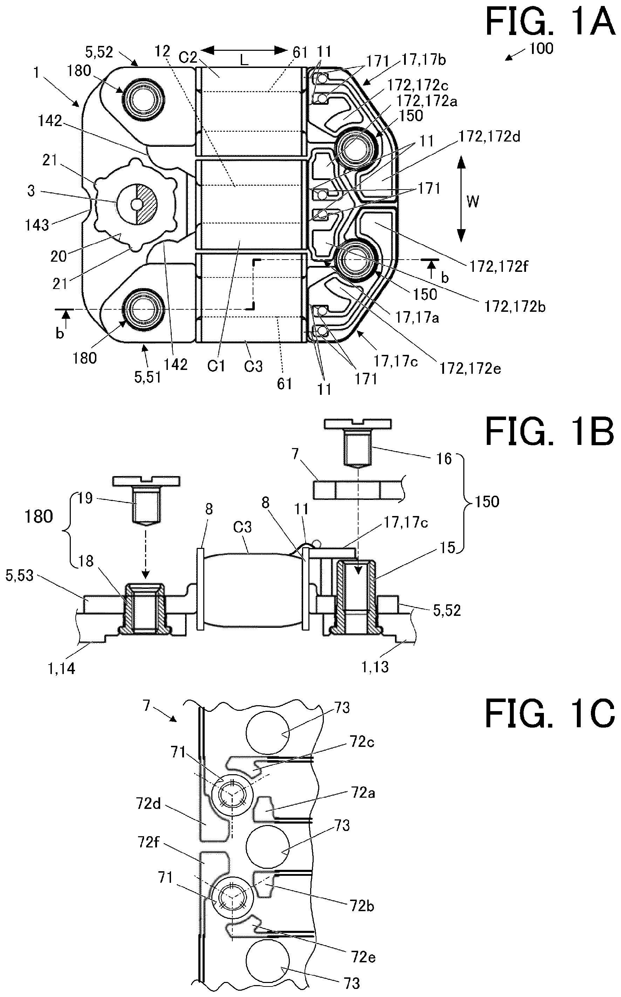

An embodiment of the stepping motor according to the present disclosure is described with reference to FIG. 1 to FIG. 6. The stepping motor of this embodiment is a small motor applicable for driving a hand movement mechanism or a date mechanism that moves hands of a time display device, such as a wristwatch, for example. The embodiment described below is provided with various limitations technically preferable for carrying out the present disclosure. However, the scope of the present disclosure is not limited to the embodiment below or illustrated examples.

As illustrated in FIG. 1A, the stepping motor 100 includes a stator 1, a rotor 3, two yokes 5 (first side yoke 51 and second side yoke 52 described later), and three coils magnetically coupled to the stator 1 (first coil C1, second coil C2, and third coil C3). In the embodiment, the first coil C1 among the three coils is a stator-integrated coil formed on the straight part 12 of the stator 1, as described later. The second coil C2 and the third coil C3 are formed on the respective yokes 5 (first side yoke 51 and second side yoke 52) that are locked to the stator 1. The stepping motor 100 of the embodiment is thus a triple-coil motor having three coils.

The rotor 3 is a magnet that is magnetized in two poles in a radial direction. For example, in FIG. 1A, the while part and the hatched part of the rotor 3 have different poles. The boundary between the S and N poles is defined as the polarization position. In the embodiment, the rotor 3 is approximately disk-shaped. A not-illustrated rotational shaft is provided at the center of the circular shape of the rotor 3. Preferable examples of the magnet used as the rotor 3 include permanent magnets, such as rare earth magnets (e.g., samarium cobalt magnets). The magnets usable as the rotor 3 are not limited to these. The rotor 3 is received in a rotor receiver 20 of the stator 1 described later. The rotor 3 is rotatable on the rotational shaft as the rotation center. In this embodiment, the rotor 3 is rotatable both in the regular direction (i.e., the clockwise direction) and the counter direction (i.e., the counterclockwise direction) in the rotor receiver 20 by a predetermined step angle (in this embodiment, 60 degrees) when drive pulses are applied to the three coils one by one, which are described later (first coil C1, second coil C2, and third coil C3). The rotational shaft is coupled with not-illustrated gears constituting a wheel train mechanism that moves hands of a time display device (e.g., a timepiece, wristwatch), for example. The gears are rotated by the rotation of the rotor 3. The rotor of the stepping motor 100 is not limited to a magnet magnetized in two poles in the radial direction. The rotor may be a magnet having three or more poles, such as six poles, for example.

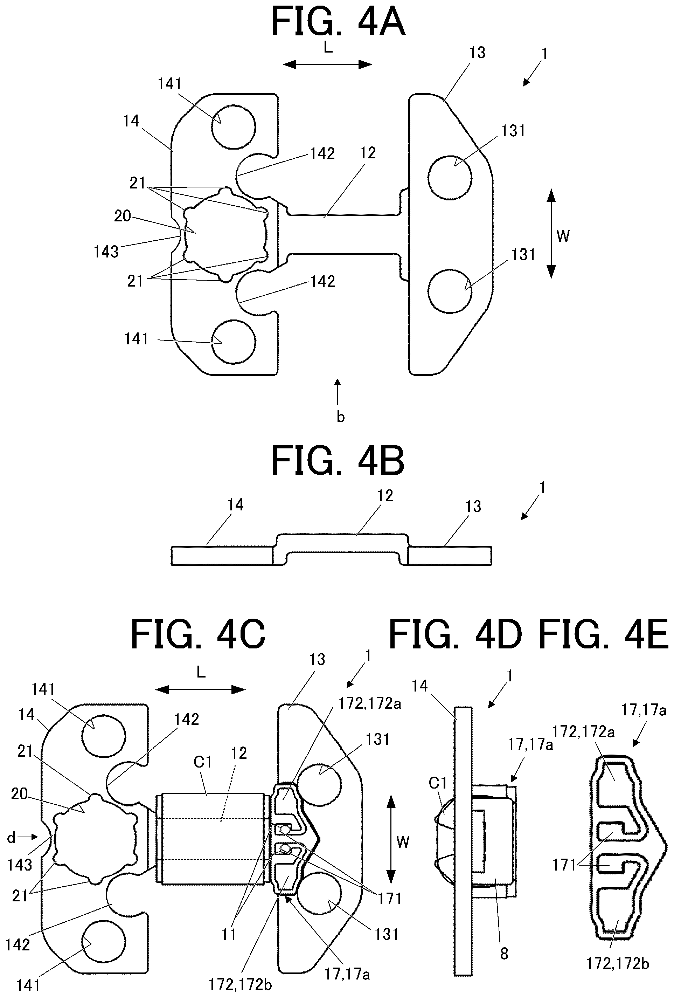

In the embodiment, the stator 1 includes a straight part 12, a first projection part 13, and a second projection part 14. The first and second projection parts 13, 14 are formed at both ends of the straight part 12 in the longitudinal direction L. In FIG. 4A and FIG. 4B, the first projection part 13 is provided at the right end of the straight part 12, and the second projection part 14 is provided at the left end of the straight part 12, as an example. The first and second projection parts 13, 14 project in directions crossing the longitudinal direction L of the straight part 12. In the embodiment, "the directions crossing the longitudinal direction L of the straight part 12" is the directions perpendicular to the longitudinal direction L. The directions in which the first and second projection parts 13, 14 project are defined as the width direction W in FIG. 1A and so forth. The first and second projection parts 13, 14 project to the right and left (upward and downward in FIG. 4A) in the width direction W by approximately the same length from both ends of the straight part 12. As illustrated in FIG. 4A, the stator 1 in the embodiment is substantially H-shaped as a whole.

The stator 1 is made of material having a high magnetic permeability, such as permalloy, for example. The straight part 12 constitutes the central yoke of the stepping motor 100. In the embodiment, as illustrated in FIG. 4B, the straight part 12 is higher than the first projection part 13 and the second projection part 14 in the thickness direction when viewed from the lateral side. Coil frames 8 (coil cases) are disposed between the straight part 12 and the first projection part 13 and between the straight part 12 and the second projection part 14, respectively (see FIG. 1B, FIG. 2, and FIG. 4C). A winding is formed between the pair of coil frames 8, so that the first coil C1 is formed on the straight part 12. As illustrated in FIG. 4A and FIG. 4C, two screw holes 131 are formed at substantially symmetrical positions of the first projection part 13 with respect to the width direction W. In each screw hole 131, a support 15 for fastening the screw, which are described later, is inserted from one surface side (the lower side in FIG. 1B). In the support 15, the screw 16 is inserted from the other surface side (the upper side in FIG. 1B). In the embodiment, the support 15 and the screw 16 constitute a first supporter 150. As illustrated in FIG. 1B, the first supporter 150 is inserted such that the first supporter 150 is substantially perpendicular to the principal surface of the first projection part 13.

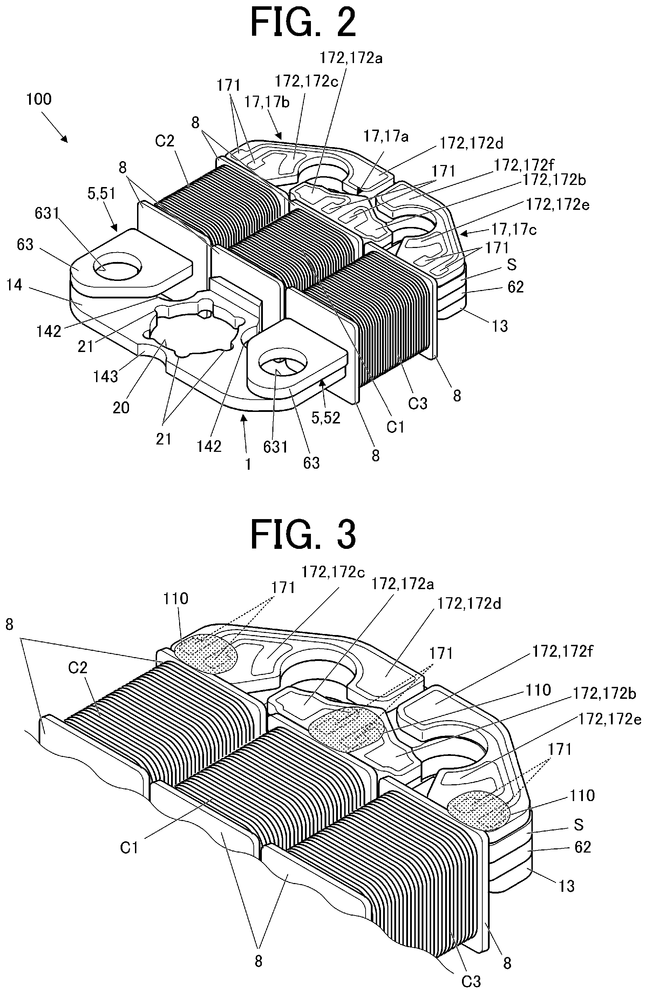

At the straight part 12 side on the first projection part 13, a first coil board 17 is disposed (see FIG. 1A, FIG. 4C, and FIG. 4E). The first coil board 17 has an approximately triangular shape so as to avoid the two screw holes 131. The first coil board 17 has a pair of connection points 171 to be connected to the wire ends 11 of the first coil C1. In the embodiment, three coil boards 17 (first coil board 17a, second coil board 17b, and third coil board 17c described later) corresponding to the three coils (first coil C1, second coil C2, and third coil C3) are disposed on the first projection part 13, as illustrated in FIG. 1A and FIG. 2. The coil boards 17 are disposed on the first projection part 13 via a spacer (s) S that adjusts the heights of the respective coil boards 17, so that the top surfaces of the three coil boards 17 are approximately flush. Thus, all of the three coil boards 17 can be electrically connected to the main board 7 described later when the main board 7 is disposed on the coil boards 17.

If the wire ends 11 are in contact with the end surface of the coil boards 17 (first, second, and third coil boards 17a, 17b, 17c), the wires may be broken. To deal with this, in this embodiment, the coil frames 8 as the coil cases have the same height as the height of the top surface of the coil boards 17 (first, second, and third coil boards 17a, 17b, and 17c). The wire ends 11 are passed over the coil frame 8 so as to form an arch shape and are connected to the connection points 171 of the coil boards 17 from above. FIG. 2 illustrates a case where the second coil C2 is connected to the connection points 171 of the second coil board 17 as an example. This configuration is common among the cases where the three coils (first coil C1, second coil C2, and third coil C3) are connected to the connection points 171 of the respective coil boards (first, second, and third coil boards 17). Thus, breakage of wires can be prevented. Further, in this embodiment, the wire ends 11 connected to the connection points 171 are covered by bonding material made of resin. With such wire-bonding parts 110 (see FIG. 3), the wire ends 11 are certainly protected.

As illustrated in FIG. 4A and FIG. 4C, two screw holes 141 are formed at substantially symmetrical positions of the second projection part 14 with respect to the width direction W. In each screw hole 141, a support 18 for fastening the screw, which are described later, is inserted from one surface side (the lower side in FIG. 1B). In the support 18, the screw 19 is inserted from the other surface side (the upper side in FIG. 1B). In the embodiment, the support 18 and the screw 19 constitute a second supporter 180. As illustrated in FIG. 1B, the second supporter 180 is inserted such that the second supporter 180 is substantially perpendicular to the principal surface of the second projection part 14.

The rotor receiver 20 is formed at the central part of the second projection part 14 in the width direction W, at which the straight part 12 of the stator 1, the first side yoke 51, and the second side yoke 52 (described later) cross each other when the stepping motor 100 is in the assembled state. The rotor receiver 20 is an approximately circular hole and receives the rotor 3. In the embodiment, the rotor receiver 20 has notches 21 at almost regular intervals along the outer circumference of the rotor 3. The notches 21 are open toward the rotor 3. The notches 21 are for maintaining the stationary state of the rotor 3. In this embodiment, six notches 21 are formed on the inner circumferential surface of the rotor receiver 20 of the stator 1. The index torque (holding torque) of the rotor 3 is greatest when the polarization position of the rotor 3 faces any of the notches 21. In a non-energized state where no drive pulse is applied, the rotor 3 is stationary at a position where the polarization position of the rotor 3 faces any of the notches 21, as illustrated in FIG. 1A.

On one side of the second projection part 14 that faces the first projection part 13 (the side closer to the first projection part 13), first cut parts 142 are formed. The first cut parts 142 are each formed between two notches 21 that are formed at the end side in the width direction W among the notches 21 of the rotor receiver 20. The first cut parts 142 are formed on both sides of the rotor 3 (the rotor receiver 20 that receives the rotor 3) with the rotor 3 in-between. Each of the first cut parts 142 is formed so as to protrude between the two notches 21. Further, in the embodiment, a second cut part 143 is formed at an end side of the stator 1 in the longitudinal direction L, namely at the side that is farther from the first projection part 13 and that is substantially parallel to the side of the second projection part 14 having the first cut parts 142. The second cut part 143 is formed so as to protrude between the two notches 21 that are formed at the end side in the longitudinal direction L.

The first cut parts 142 and the second cut part 143 are formed to surround the rotor 3 in three directions. The surroundings of the rotor receiver 20 of the rotor 3 surrounded by the first and second cut parts 142, 143 have a substantially equilateral triangle shape. The width between the edge of the rotor receiver 20 and the outer edge of the second projection part 14 is narrow at portions where the first cut parts 142 and the second cut part 143 are formed. Such narrow portions are more likely to have magnetic saturation and greater magnetic resistance than other portions and therefore prevent the passage of magnetic flux. Thus, in the embodiment, the first cut parts 142 and the second cut part 143 serve as a magnetic flux control part that controls the direction of magnetic flux such that the magnetic flux from the rotor 3 is directed by approximately 120 degrees each time.

In the embodiment, the two yokes 5 (first side yoke 51 and second side yoke 52) of the stepping motor 100 are disposed on both sides of the straight part 12 along the longitudinal direction L of the straight part 12, as illustrated in FIG. 1A and FIG. 2. The first side yoke 51 and the second side yoke 52 have an approximately symmetrical shape about the straight part 12 and basically have the same structure. When no distinction is required between the first side yoke 51 and the second side yoke 52, they are simply referred to as the yoke(s) 5. In the embodiment, the yokes 5 are made of material having a high magnetic permeability, such as permalloy, for example. The two yokes 5 each include a straight part 61, a projection part 62 formed at one end of the straight part 61 and wider than the straight part 61, and a projection part 63 formed at the other end of the straight part 61 and wider than the straight part 61.

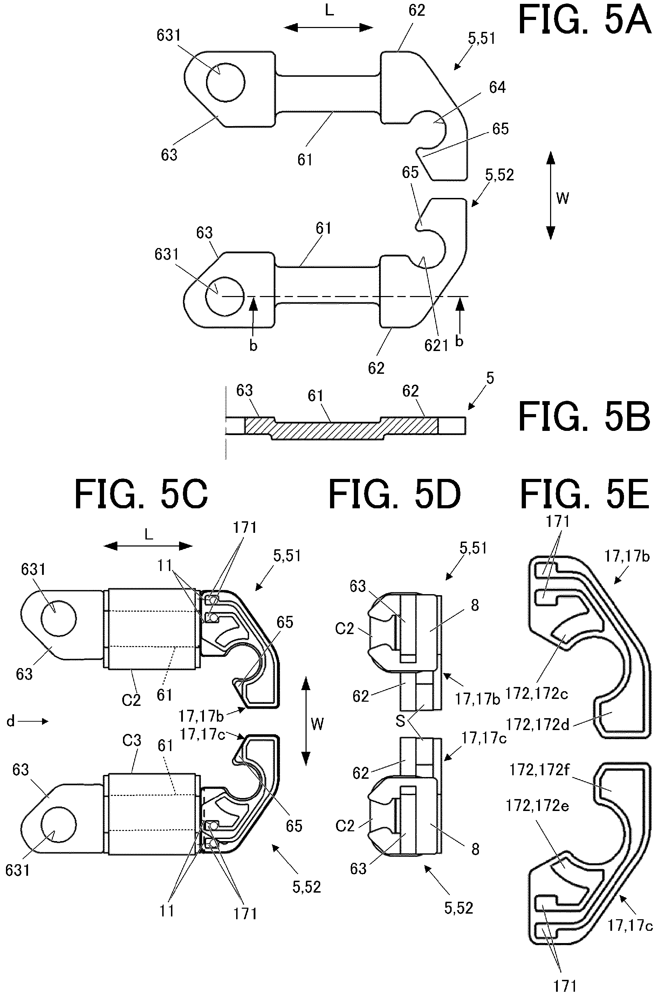

For each yoke 5, the coil frames 8 as the coil case are provided between the projection part 62 and the straight part 61 and between the straight part 61 and the projection part 63 (see FIG. 2). As illustrated in FIG. 2, the second coil C2 is formed on the straight part 61 of the first side yoke 51, which is located on the left side of the straight part 12 of the stator 1 (the upper side in FIG. 1A, FIG. 5A, and so forth), by forming a winding between the pair of coil frames 8. Similarly, the third coil C3 is formed on the straight part 61 of the second side yoke 52, which is located on the right side of the straight part 12 of the stator 1 (the lower side in FIG. 1A, FIG. 5A, and so forth), by forming a winding between the pair of coil frames 8 provided to the straight part 61. One end of each of the two yokes 5 is locked to the first projection part 13 via the first supporter 150, and the other end thereof is locked to the second projection part 14 via the second supporter 180 (see FIG. 1A and FIG. 1B).

In the embodiment, the projection part 63 of the first side yoke 51 is locked to one side (the upper side in FIG. 1A) in the width direction W of the second projection part 14 of the stator 1 via the second supporter 180. The projection part 63 of the second side yoke 52 is locked to the other side (the lower side in FIG. 1A) in the width direction W of the second projection part 14 of the stator 1 via the second supporter 180. Specifically, the projection part 63 of the yoke 5 has a screw hole 631 at a position corresponding to the screw hole 141 of the second projection part 14 of the stator **1.** The support 18 is inserted through the screw hole 141 and the screw hole 631, and the screw 19 is fastened to the support 18, so that the projection part 63 of the yoke 5 is locked to the second projection part 14. The projection part 62 of the first side yoke 51 is locked to one side (the upper side in FIG. 1A) in the width direction W of the first projection part 13 of the stator 1 via the first supporter 150. The projection part 62 of the second side yoke 51 is locked to the other side (the lower side in FIG. 1A) in the width direction W of the first projection part 13 of the stator 1 via the first supporter 150. Specifically, the projection part 62 of the yoke 5 has a substantially C-shaped cut part 621 at a position corresponding to the screw hole 131 of the first projection part 13 of the stator 1. The support 15 is inserted through the screw hole 131 and the cut part 621, and the screw 16 is fastened to the support 15, so that the projection part 62 is locked to the first projection part 13.

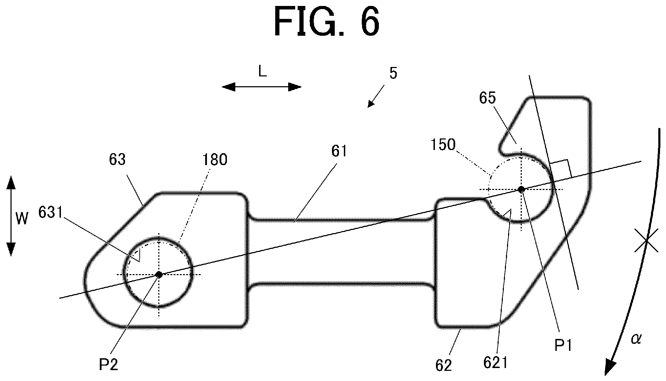

As illustrated in FIG. 5A and so forth, the catch part 65 is formed on one end of the yoke 5 so as to go around the first supporter 150 from the yoke side toward the straight part 12 side. In the embodiment, the catch part 65 is formed on the free end of the cut part 621 of the projection part 62. The catch part 65 is described in detail with reference to FIG. 6. Although FIG. 6 illustrates the second side yoke 52, which is illustrated below the straight part 12 of the stator 1 in FIG. 1A and so forth, as an example, the following description is also applied to the first side yoke 51. In FIG. 6, the first supporter 150 and the second supporter 180 are virtually illustrated with double-dashed lines.

As illustrated in FIG. 1A and FIG. 6, the first supporter 150 in the embodiment is cylindrical and has a substantially circular shape in a top view. In FIG. 6, P1 is the center point of the circle of the first supporter 150. The catch part 65 is locked on (caught on) the outer circumferential surface at the straight part 12 side of the first support part 150. Thus, the movement of the catch part 65 in the direction of separating from the straight part 12 (a separation direction α indicated by the arrow in FIG. 6) is restrained. In the embodiment, the second supporter 180, which locks the projection part 63 to the second projection part 14, is also cylindrical and has a substantially circular shape in a top view. In FIG. 6, P2 is the center point of the circle of the second supporter 180. Thus, in a state where the yoke 5 is locked to the stator 1 via the second supporter 180, the yoke 5 is rotatable in the direction of separating from the straight part 12 of the stator 1 (the separation direction α) on the center point P2 of the circle of the second supporter 180 as the rotation center. Since the catch part 65 is formed to go around the first supporter 150 toward the straight part 12, the catch part 65 prevents the yoke 5 from rotating in the separation direction α on the center point P2 as the rotation center. In particular, since the catch part 65 has a hook shape in the embodiment, the catch part 65 is certainly caught on the first supporter 150 and certainly prevents the rotation of the yoke 5 in the separation direction α.

The catch part 65 may not go around the outer circumference of the first supporter 150 to the extent exemplified in FIG. 6 and FIG. 5A. For example, as illustrated in FIG. 6, when the following lines are drawn in a plan view: a straight line that connects the center point P1 of the first supporter 150 to the center point P2 of the second supporter 180; and a perpendicular line that is perpendicular to the line connecting P1 and P2 and that is tangential to the outer circumferential surface of the first supporter 150 at a point farther from the second supporter 180, it is preferable that the catch part 65 project toward the second supporter 180 beyond the perpendicular line. In other words, the catch part 65 may project into a fan-shaped region that extends along the straight part 12-side outer circumferential surface of the first supporter 150, for example. The region, shape, and size of the catch part 65 are appropriately determined based on the size of the first supporter 150 in its radial direction, the shape of the first supporter 150, and so forth, so that the catch part 65 can prevent the rotation of the yoke 5 on the center point P2 as the rotation center.

On the projection part 62 of each yoke 5, the coil board 17 is disposed. The coil board 17 is connected to the wire ends 11 of the corresponding coil. Specifically, on the projection part 62 of the first side yoke 51, the second coil board 17b corresponding to the second coil C2 is disposed; and on the projection part 62 of the second side yoke 52, the third coil board 17c corresponding to the third coil C3 is disposed. Similarly to the case of the first coil C1 formed on the straight part 12 of the stator 1, the coil boards 17 (the second coil board 17b and the third coil board 17c) are each disposed on the corresponding projection part 62 via the spacer S (see FIG. 2 and FIG. 3). Thus, the three coil boards 17 corresponding to the respective three coils are substantially flush in the height direction, as illustrated in FIG. 2 and FIG. 3.

Next, the function of the stepping motor 100 in this embodiment is described. In assembling the stepping motor 100 of the embodiment, the coil frames 8 are attached to the straight part 12 of the stator 1 illustrated in FIG. 4A, and a winding is formed approximately uniformly between the coil frames 8. Thus, the first coil C1 is formed on the straight part 12 as the center yoke. The first coil board 17a is disposed on the first projection part 13 of the stator 1 with the spacer S in-between. To the connection points 171 of the first coil board 17a, the wire ends 11 pulled out from the first coil C1 are connected. From above the connected part, the wire bonding part 110 is formed with resin. Thus, the connected part between the wire ends 11 and the coil board 17 is covered with resin and protected.

The coil frames 8 are attached to the straight part 61 of the first side yoke 51, and a winding is formed approximately uniformly between the coil frames 8. Thus, the second coil C2 is formed on the straight part 61. The second coil board 17b is disposed on the projection part 62 of the first side yoke 51 with the spacer S in-between. To the connection points 171 of the second coil board 17b, the wire ends 11 pulled out from the second coil C2 are connected. From above the connected part, the wire bonding part 110 is formed with resin. Thus, the connected part between the wire ends 11 and the coil board 17 is covered with resin and protected. Similarly, a winding is formed approximately uniformly on the straight part 61 of the second side yoke 52, so that the third coil C3 is formed on the straight part 61. The third coil board 17c is disposed on the projection part 62 of the second side yoke 52 with the spacer S in-between. To the connection points 171 of the third coil board 17c, the wire ends 11 pulled out from the third coil C3 are connected. From above the connected part, the wire bonding part 110 is formed with resin. Thus, the three coil boards 17 to which the wirings of the respective three coils are connected are disposed on the first projection part 13 of the stator 1 such that the surfaces of the three coil boards 17 are approximately flush in the height direction (see FIG. 3) .

In this state, the main board 7 is placed on the first projection part 13 from above the coil boards 17 and electrically connected to the coil boards 17. As illustrated in FIG. 2 and FIG. 3, each of the coil boards 17 has terminal parts 172 for electrically connecting to the main board 7. The terminal parts 172 are disposed at positions different from the positions of the connection parts 171, which are connected to the wire ends 11. As illustrated in FIG. 2 and FIG. 3, the first coil board 17a has two terminal parts 172a and 172b; the second coil board 17b has two terminal parts 172c and 172d; and the third coil board 17c has two terminal parts 172e and 172f. As illustrated in FIG. 1C, the main board 7 is provided with pad parts 72 at positions corresponding to the respective terminal parts 172 for electrically connecting to the terminal parts 172. In FIG. 1C, the main board 7 is turned over, and the surface to be in contact with the coil board 17 is illustrated. In FIG. 1C, the pad part 72a is connected to the terminal part 172a of the first coil board 17a, and the pad part 72b is connected to the terminal part 172b. The pad part 72c is connected to the terminal part 172c of the second coil board 17b, and the pad part 72d is connected to the terminal part 172d. The pad part 72e is connected to the terminal part 172e of the third coil board 17c, and the pad part 72f is connected to the terminal part 172f.

The terminal parts 172 and the corresponding pad parts 72 of the main board 7 are arranged around the first supporter 150. Specifically, as illustrated in FIG. 1C, the main board 7 has through holes 71 through which the respective first supporters 150 are inserted at positions corresponding to the first supporters 150 when attached; and, for each first supporter 150, the terminal parts 172 and the corresponding pad parts 72 of the main board 7 are arranged so as to divide the region around the first supporter 150 into approximately 120-degree regions. Thus, six electrically-connected areas (two electrically-connected areas for each of the three coils) can be stably secured around the first supporters 150. Then, the coil boards 17 and the main board 7 are screwed together by the screws 16 of the first supporters 150. Since the areas at which the coil boards 17 are electrically connected to the main board 7 are disposed near the screwing position, the connection becomes stable.

Thus, the three coils are stably fixed around the first supporter 150 and mounted on the stator 1. This enables the stepping motor 100 that is effective and efficient in terms of areas, configuration, and electricity. Further, the main board 7 has openings 73 at positions corresponding to the wire bonding parts 110 formed on the coil boards 17. The openings 73 are formed to avoid the wire bonding parts 110. Thus, the pad parts 72 of the main board 7 are in surface contact with the terminal parts 172 of the coil boards 17 without rattling, and the pad parts 72 can be stably electrically connected to the terminal parts 172, even when the wire bonding parts 110 rise on the surface of the coil boards 17. Further, since the electrical connection parts between the boards are gathered around the first supporter 150, the electrical connection parts can be easily separated from the wire bonding parts 110, and the mounting area becomes compact.

Further, at the end part of the projection part 62 of each yoke 5, the catch part 65 is formed such that the catch part 65 goes around the first supporter 150 toward the straight part 12. The catch part 65 prevents the yoke 5 from detaching from the straight part 12 in the separation direction α toward the outside of the stepping motor 100. Thus, even when the stepping motor 100 includes multiple coils, the coils do not detach from the stator 1. Such a stepping motor 100 can be compactly mounted on the board of various devices while securing electrical connection with the main board 7.

As described above, according to the embodiment, the stepping motor 100 includes: the rotor 3 magnetized in a radial direction; the stator 1 that includes the straight part 12, the first projection part 13, the second projection part 14, and the rotor receiver 20 that receives the rotor 3. The first projection part 13 and the second projection part 14 are formed at both ends of the straight part 12 in the longitudinal direction L of the straight part 12 and projects in directions crossing the longitudinal direction. The rotor receiver 20 is formed in the second projection part 14. The stepping motor 100 further includes two yokes 5 disposed along the longitudinal direction L at both ends of the straight part 12. One end of each of the yokes 5 is locked to the first projection part 13 via the first supporter 150. Another end of each of the yokes 5 is locked to the second projection part 180 via the second supporter 180. The stepping motor 100 further includes multiple coils (three coils in the embodiment) magnetically coupled to the stator 1. The catch part 65 is formed at the one end of each of the yokes 5 such that the catch part 65 goes around the first supporter 150 from the yoke 5 side toward the straight part 12 side. Thus, even when the stepping motor 100 includes multiple coils (in the embodiment, three coils), the coils are prevented from detaching from the stator 1 by the catch part 65 locked to the first supporter 150. Since there is no need of a wall or the like that prevents detachment of coils, the stepping motor 100 can be compactly mounted on the board of various devices, and the package density can be increased.

Further, in the embodiment, the first supporter 150 is inserted substantially vertically to the principal surface of the first projection part 13, and the second supporter 180 is inserted substantially vertically to the principal surface of the second projection part 14. According to such a configuration, the stator 1, each of the yokes 5, and the main board 7 can be easily screwed together in the vertical direction. Thus, the components are easily assembled and compactly and stably connected to each other.

Further, in the embodiment, the catch part 65 is hook-shaped. Thus, detachment of the yoke 5 from the stator 1 can be effectively prevented by a simple configuration.

Further, in the embodiment, the first supporter 150 has a cylindrical shape; and the catch part 65 is caught on the straight-part-side outer circumferential surface of the first supporter 150 and is thereby restrained from moving in a direction (separation direction α) of separating from the straight part 12. Thus, detachment of the yoke 5 from the stator 1 can be certainly prevented.

Further, in the embodiment, in a case where following two lines are drawn in a plan view: (i) a straight line that connects the center (center point P1) of the first supporter 150 to the center (center point P2) of the second supporter 180 and (ii) a perpendicular line that is perpendicular to the line connecting the centers and that is tangential to the outer circumferential surface of the first supporter 150 at a point farther from the second supporter 180, the catch part 65 projects toward the second supporter 180 beyond the perpendicular line. Thus, detachment of the yoke 5 from the stator 1 can be certainly prevented.

Further, in the embodiment, the catch part 65 projects in a radial region that extends along the straight part 12-side outer circumferential surface of the first supporter 150. Thus, detachment of the yoke 5 from the stator 1 can be certainly prevented.

Further, in the embodiment, the first coil C1 among the three coils is formed on the straight part 12; the second coil C2 and the third coil C3 are formed on the respective yokes 5; and the coil boards 17 corresponding to the three coils are disposed on the first projection part 13. Thus, when the main board 7, which has the pad parts 72 for electrical connection corresponding to the first projection part 13, is disposed and connected, the main board 7 can be electrically connected to all of the three coils.

Further, in the embodiment, the coil boards 17 corresponding to the three coils are disposed so as to divide a region on the first projection part 13 into approximately 120-degree regions in a top view. According to such a configuration, stable electrical connection is secured between the main board and the coils, and every coil can stably receive drive pulses via the main board **7.**

Although the embodiment of the present disclosure has been described, the embodiment does not limit the present disclosure and can be variously modified without departing from the scope of the present disclosure. For example, although the catch part 65 has a hook shape in the above embodiment, the shape of the catch part is not limited thereto. For example, the degree of projection of the catch part 65 toward the first supporter 150 may be less than the illustrated example, as long as the catch part 65 can prevent the rotation of the yoke 5 on the center point P2 as the rotation center. Further, instead of the substantially C-shaped cut part 621, a screw hole through which the first supporter 150 is inserted may be formed in the projection part 62. In this case, the wall around the screw hole serves as a catch part that goes around the first supporter 150 toward the straight part 12.

In the embodiment, the stepping motor 100 includes three coils magnetically coupled to the stator 1 as an example. However, the number of coils is not limited to three as long as there are multiple coils. For example, the present disclosure is also applicable to a configuration that does not include the first coil C1 formed on the straight part 12 among the three coils of the embodiment.

In the embodiment, the stepping motor 100 is used for a timepiece and so forth as an example. However, devices to which the stepping motor 100 is applicable are not limited to a timepiece.

Although the embodiment of the present disclosure has been described, the scope of the present disclosure is not limited to the embodiment described above but encompasses the scope of the disclosure recited in the claims and the equivalent thereof.

## Claims

1. A stepping motor (100) comprising:
a rotor (3) magnetized in a radial direction;
a stator (1) that includes a straight part (12), a first projection part (13), a second projection part (14), and a rotor receiver (20) that receives the rotor, the first and second projection parts being formed at both ends of the straight part in a longitudinal direction (L) of the straight part and projecting in directions crossing the longitudinal direction, the rotor receiver being formed in the second projection part;
two yokes (5, 51, 52) disposed along the longitudinal direction at both ends of the straight part, one end of each of the yokes being locked to the first projection part via a first supporter (150), another end of each of the yokes being locked to the second projection part via a second supporter (180); and
multiple coils (C1 to C3) magnetically coupled to the stator,
wherein a catch part (65) is formed at the one end of each of the yokes such that the catch part goes around the first supporter from a yoke (5) side toward a straight part (12) side.

2. The stepping motor according to claim 1, wherein:
the first supporter is inserted vertically to a principal surface of the first projection part, and
the second supporter is inserted vertically to a principal surface of the second projection part.

3. The stepping motor according to claim 1 or claim 2, wherein the catch part is hook-shaped.

4. The stepping motor according to any one of claims 1 to 3, wherein:
the first supporter has a cylindrical shape, and
the catch part is caught on a straight-part-side outer circumferential surface of the first supporter and is thereby restrained from moving in a direction of separating from the straight part.

5. The stepping motor according to any one of claims 1 to 4, wherein in a case where following two lines are drawn in a plan view: (i) a straight line that connects a center (P1) of the first supporter to a center (P2) of the second supporter and (ii) a perpendicular line that is perpendicular to the straight line connecting the centers and that is tangential to an outer circumferential surface of the first supporter at a point farther from the second supporter, the catch part projects toward the second supporter beyond the perpendicular line.

6. The stepping motor according to any one of claims 1 to 5, wherein the catch part projects in a fan-shaped region that extends along a straight-part-side outer circumferential surface of the first supporter.

7. The stepping motor according to any one of claims 1 to 6, comprising three coils as the multiple coils, wherein:
a first coil (C1) among the three coils is formed on the straight part,
a second coil (C2) and a third coil (C3) among the three coils are formed on the respective yokes, and
coil boards (17) corresponding to the three coils are disposed on the first projection part.

8. The stepping motor according to claim **7,** wherein the coil boards corresponding to the three coils are disposed so as to divide a region on the first projection part into approximately 120-degree regions in a top view.

9. A timepiece comprising the stepping motor according to any one of claims 1 to 8.
